(19) Europäisches Patentamt / European Patent Office / Office européen des brevets

(11) **EP 3 498 398 B1**

(12) **EUROPEAN PATENT SPECIFICATION**

(45) Date of publication and mention
of the grant of the patent:
**14.04.2021  Bulletin 2021/15**

(21) Application number: **17839247.8**

(22) Date of filing: **28.07.2017**

(51) Int Cl.:
*B22F 1/00* *(2006.01)*        *B22F 1/02* *(2006.01)*
*B22F 9/30* *(2006.01)*        *B82Y 40/00* *(2011.01)*

(86) International application number:
**PCT/JP2017/027392**

(87) International publication number:
**WO 2018/030174 (15.02.2018 Gazette 2018/07)**

(54) **METHOD FOR PRODUCING METALLIC SILVER FINE PARTICLES**

VERFAHREN ZUR HERSTELLUNG VON METALLISCHEN SILBERFEINTEILCHEN

PROCÉDÉ DE PRODUCTION DE FINES PARTICULES D'ARGENT MÉTALLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.08.2016   JP 2016158261**

(43) Date of publication of application:
**19.06.2019   Bulletin 2019/25**

(73) Proprietor: **Bando Chemical Industries, Ltd.
Kobe-shi, Hyogo 650-0047 (JP)**

(72) Inventors:
• **KUBOTA Shigeki
  Kobe-shi
  Hyogo 650-0047 (JP)**
• **NAKAJIMA Naoya
  Kobe-shi
  Hyogo 650-0047 (JP)**

(74) Representative: **Mewburn Ellis LLP
Aurora Building
Counterslip
Bristol BS1 6BX (GB)**

(56) References cited:
**EP-A1- 2 881 199         JP-A- 2013 216 919
JP-A- 2014 194 057         JP-A- 2015 161 008
US-A1- 2010 279 006         US-A1- 2010 283 013**

**Description**

TECHNICAL FIELD

The present invention relates to a method for producing metallic silver fine particles used in a wide variety of fields such as catalysts, sensors, conductive materials and adhesives.

BACKGRAOUND ARTS

Metallic silver fine particles are used in a wide variety of fields such as catalysts, sensors, conductive materials and adhesives, and particularly in recent years, they have been progressed as a printed electronics application, an application for bonding light emitting elements such as an LED to a substrate, an application for bonding to a semiconductor chip to a substrate and an application for bonding those substrates to a heat dissipation member.

As a method for producing such metallic silver fine particles, for example, as proposed in Patent Literature 1 (Japanese Patent Laid-Open Application No. 2009-270146) and Patent LIterature 2 (Japanese Patent Laid-Open Application No. 2012-162767), there has been conventionally employed a method for producing metallic silver fine particles by reacting silver oxalate and an amine to form a complex compound, and thermally decomposing the thus produced complex compound.

More specifically, Patent Literature 1 discloses "a method of manufacturing a coated metal microparticle includes: a first step in which an amine mixture containing an alkylamine having 6 or more carbon atoms and an alkylamine having 5 or less carbon atoms is mixed with a metal compound containing a metal atom, thus producing a complex compound containing the metal compound and an amine; and a second step in which metal microparticles are produced by decomposing the complex compound, by heating the complex compound", and Patent Literature 2 discloses " a method for producing silver hyperfine particles wherein silver oxalate and oleylamine are reacted, so as to produce a complex compound at least comprising silver, oleylamine and oxalic acid ions, and then the produced complex compound is decomposed under heating". That is, in these methods, since the decomposition temperature of silver oxalate can be greatly lowered, it is possible to obtain metallic silver fine particles whose surface is covered with the amine which is used for the complex formation under mild conditions.

PRIOR ART LITERATURE

Patent Literature

Patent Literature 1: Japanese Patent Laid-Open Application No. 2009-270146
Patent Literature 2: Japanese Patent Laid-Open Application No. 2012-162767

EP A 2881199 proposes a method for producing silver nanoparticle-containing ink and silver nanoparticle-containing ink. US 2010/028013 proposes a method for producing silver fine powder by mixing a silver particle dispersion of silver particles coated with a primary amine and hexylamine. US 2010/0279006 proposes another method for silver fine powder.

SUMMARY OF INVENTION

Problem to be Solved by the Invention

However, in the methods of Patent Literature 1 and Patent Literature 2, since the particle size and particle morphology of finally produced metallic silver fine particles are determined depending on the kind of the amine used for the complex formation, the kind and combination of the amines that can be used are limited. That is, even if there is an amine to be coordinated on the surface and to be coated, the amine cannot be used unless the particle size and particle morphology of finally produced metallic silver fine particles cannot be controlled. In addition, it is difficult to obtain metallic silver fine particles with a high coating ratio of a carboxylic acid.

An object of the present invention is to provide a method for producing metallic silver fine particles in which, arbitrary amines can be coordinated to and coated on metallic silver fine particles having an arbitrarily synthesized particle size and particle morphology, without changing the particle size or the particle morphology, and also both the synthesis of metallic silver particles having a desired particle size and particle morphology and the surface modification of desired metallic fine particles can be achieved. Another object of the present invention is to provide a method for producing metallic silver fine particles where a carboxylic acid can be coordinated and coated.

Means to solve the problem

In order to solve the above-mentioned problems, the present invention provides a method for producing metallic silver fine particles according to claim 1.

In the above method for producing metallic silver fine particles, it is preferable that the first amine is an alkoxyamine.

In the above method for producing metallic silver fine particles, it is preferable that the second amine and the carboxylic acid have 11 carbon atoms or fewer.

In the above method for producing metallic silver fine particles, it is preferable that, in the second step, the second amine or the carboxylic acid is mixed with the metallic silver fine particles and heated and stirred.

In the above method for producing metallic silver fine particles, it is preferable that an average primary particle size of the first metallic silver fine particles and the second metallic silver fine particles is 10 to 200 nm.

In the above method for producing metallic silver fine particles, it is preferable that a washing step for removing an unreacted coordination compound is included between the first step and the second step.

In the above method for producing metallic silver fine particles, it is preferable that, in the second step, the substitution is carried out under the conditions of a heating temperature of 50 to 150 °C and/or a heating period of time of 5 to 20 minutes.

Effects of the invention

According to the method for producing metallic silver fine particles of the present invention, arbitrary amines can be coordinated to and coated on metallic silver fine particles having an arbitrarily synthesized particle size and particle morphology, without changing the particle size or the particle morphology, and also both the synthesis of metallic silver particles having a desired particle size and particle morphology and the surface modification of desired metallic fine particles can be achieved. Further, according to the method for producing metallic silver fine particles of the present invention, a carboxylic acid can be coordinated and coated.

Brief explanation of drawings

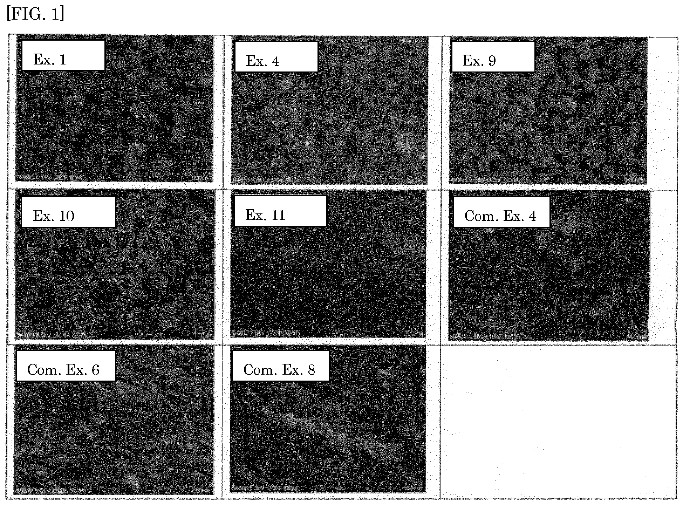

[FIG. 1] FIG. 1 shows SEM images of the metallic silver fine particles produced in Examples 1, 4, 9, 10 and 11 of the present invention and Comparative Examples 4, 6 and 8.

Embodiments to perform the invention

In the following, representative embodiments of the method for producing metallic silver fine particles of the present invention will be described in detail, including examples and comparative examples. However, the present invention is not limited thereto, and all changes of design having technical ideas as described in the claims are included in the present invention.

The present invention relates to a method for producing metallic silver fine particles according to claim 1.

(1) First Step

In the first step of the method for producing metallic silver fine particles of the present invention, the complex compound including the silver oxalate and the coordination compound is heated and decomposed to obtain first metallic silver fine particles.

In the method for producing fine metal particles of the present invention, the complex compound including the silver oxalate and the coordination compound is used as a starting material. Here, the reason why the silver oxalate is used is that though the silver oxalate has a high decomposition temperature of around 200 °C, when forming the complex with the coordination compound such as the first amine, the decomposition temperature of the silver oxalate can be lowered remarkably, and since the coordination compound such as the first amine used for complex formation also functions as a surface modifying agent, it is possible to obtain the metallic silver fine particles coated with the coordination compound such as the first amine under mild conditions.

As the coordination compound constituting the complex compound which is the starting material in the present invention, various compounds can be used as long as the effect of the present invention is not impaired, but one or more of the first amine which is different from the second amine used in the second step described later is used.

The first amine is not particularly limited as long as the amine-coated first metal fine particles can be obtained by forming the complex with silver oxalate and then decomposed. Since the first amine which coats the first metallic silver fine particle is substituted in the second step, an amine having 5 or less carbon atoms, which is considered to have poor storage stability of the metallic silver fine particles, can be used alone. The lower limit of the carbon atoms may be 3.

As the first amine, various amines can be used, which may be linear or branched and may have side chains. Examples include a diamine or an alkoxyamine and an amino alcohol such as 1,2-ethanediamine, 2-methoxyethylamine, 3-methoxypropylamine, 3-ethoxypropylamine, 1,4-butanediamine, 1,5-pentanediamine, pentanolamine or aminoisobutanol; in addition thereto, an alkylamine such as propylamine, butylamine, or pentylamine (linear alkylamine, may have a side chain); a cycloalkyl amine such as cyclopentylamine; a primary amine such as allylamine; a secondary amine such as piperidine; a tertiary amine such as dimethyl propanediamine, or pyridine; 2-(2-aminoethoxy)ethanol, N-methyl-1,3-diaminopropane, and the like.

The aforementioned amine may be a compound containing a functional group other than an amine such as a hydroxyl group, a carboxyl group, an alkoxy group, a carbonyl group, an ester group, a mercapto group or the like. Further, the aforementioned amine may be used alone, or in combination of two or more kinds. In addition, the boiling point at atmospheric pressure is preferably 300 °C or lower, more preferably 250 °C or lower.

Among them, desirable is a primary or secondary alkoxyamine having 5 or less carbon atoms represented by 3-methoxypropylamine or 3-ethoxypropylamine, etc. are used in view of formation rate and decomposition temperature of the silver oxalate amine complex.

Here, in the first step, the complex compound including the silver oxalate and the coordination compound may be produced by a conventionally known method, for example, the coordination compound such as the amine and the silver oxalate are mixed, for example, under the conditions at 20 to 150 °C for 1 to 60 minutes.

(2) Second Step

In the second step of the method for producing metallic silver fine particles of the present invention, at least one kind of a second amine or a carboxylic acid is mixed with the first metallic silver fine particles obtained in the first step to obtain second metallic silver fine particles in which at least a portion of the coordination compound of the first metallic silver fine particles is substituted with the second amine or the carboxylic acid.

The second amine or the carboxylic acid used here is a compound different from the aforementioned coordination compound including the first amine, and is the desired compound as the coating organic material of the second metal fine particles which is the of the final product. The present invention has an effect that the degree of freedom for selecting the coating organic material.

The number of carbon atoms of the second amine or the carboxylic acid is desirably 11 or less. Considering the application to a conductive ink and a bonding material which utilizes melting / fusing effect due to the melting point drop of the metallic silver fine particles, when the number of carbon atoms is too large, since the volume of the coating organic material in the metallic silver fine particles increases, it is disadvantageous for increasing the density of the sintered silver, and further the boiling point becomes higher, which adversely affects the low-temperature sinterability. In addition, when the number of carbon atoms increases, since the polarity decreases, the compatibility with the excess amine to be substituted becomes worse, which makes the substitution difficult. The lower limit of the number of carbon atoms may be 3.

The second amine which can be used here is an amine different from the aforementioned first amine, and a compound having at least one amino group can be widely used, and the aforementioned amine may be a compound containing a functional group other than an amine such as a hydroxyl group, a carboxyl group, an alkoxy group, a carbonyl group, an ester group, a mercapto group or the like. Further, the aforementioned amine may be used alone, or in combination of two or more kinds. In addition, the boiling point at atmospheric pressure is preferably 300 °C or lower, more preferably 250 °C or lower.

The carboxylic acid which can be used here may be a compound having at least one carboxyl group can be widely used, and examples thereof include formic acid, oxalic acid, acetic acid, hexanoic acid, acrylic acid, octylic acid, oleic acid and the like. A part of carboxyl groups of the carboxylic acid may form a salt with the metal ion. The metal ion may include two or more metal ions.

The carboxylic acid may be a compound containing a functional group other than the carboxyl group, such as an amino group, a hydroxyl group, an alkoxy group, a carbonyl group, an ester group, a mercapto group or the like. In this case, it is preferable that the number of carboxyl groups is not less than the number of functional groups other than the carboxyl group. In addition, the carboxylic acid may be used alone, or in combination of two or more kinds. In addition, the boiling point at atmospheric pressure is preferably 300 °C or lower, more preferably 250 °C or lower. Also the amine and the carboxylic acid form amides. Since the amide group adsorbs to the surface of the metallic silver fine particles appropriately, the organic component may contain the amide group.

In this second step, it is preferable that at least one kind of a second amine or a carboxylic acid is mixed with the first metallic silver fine particles obtained in the first step, and the mixture is heated under conditions of a heating temperature of 25 (room temperature) to 150 °C, preferably 50 to 250 °C, and/or a heating time of 5 to 20 minutes to substitute the coordination compound such as the amine with the second amine or the carboxylic acid.

Although it is theoretically possible to carry out the substitution at room temperature, since heating will lead to more dominant release of the coordination compound being coated, it is preferable to substitute with heating. The heating temperature is not particularly limited, but when the temperature exceeds 150 °C, the release becomes dominant excessively, and particularly in the case of substitution of the amine having a weak adsorptive power, since the metal silver fine particles aggregate with each other, it is preferable that the temperature is not higher than the temperature at which aggregation does not proceed. The substitution time is not particularly limited, but it can be sufficiently substituted when being 15 minutes or longer.

(3) Optional Step (Washing Step)

In the present invention, though the desired second metallic silver fine particles can be produced by the above first step and second step, it is preferable to carry out a washing step for removing an unreacted coordination compound between the first step and the second step.

The complex compound containing the silver oxalate and the coordination compound (the first amine) used as a starting material in the first step may also contain a coordination compound which is coordinated with a weak coordination bonding force or free. Such a free coordination compound may lower the efficiency of substitution in the second step. Therefore, by adding a washing step for removing unreacted coordination compound, it is possible to realize the substitution at a more effective and high ratio.

As the washing step, for example, there are a method in which a dispersion liquid containing metal fine particles coated with the organic component (metallic silver fine particles obtained in the first step) is allowed to stand for a certain period of time, the resulting supernatant liquid is removed, and then an alcohol (methanol, etc.) is added to the mixture, the dispersion is stirred again and allowed to stand for a certain period of time, and then the supernatant liquid is removed, repeating the steps several times, a method in which the centrifuging instead of the above stationary method, a method in which desalting is carried out by an ultrafiltration apparatus or an ion exchanger, or the like. By removing the organic solvent by this washing, the metal fine particles coated with the organic component of the present embodiment can be obtained.

(4) Others

In the method for producing metal fine particles of the present invention, the conditions other than the above (1) to (3) can be appropriately selected within the range not to impair the effects of the present invention, and, for example, the average primary particle sizes of the first metallic silver fine particles in the first step and the second metallic silver fine particles in the second step may preferably be 10 to 200 nm, considering the use of a conductive ink and a bonding material, etc. which utilize the melting / fusing effect by the melting point drop of the metallic silver fine particles.

The particle size and the shape of the metallic silver fine particles are not particularly limited as long as the effect of the present invention is not impaired, and the average primary particle size may be less than 1 $\mu$m, but the preferable average primary particle size is 10 to 200 nm, and more preferred average primary particle size is 10 to 100 nm. When the average primary particle size is 10 nm or more, the influence of the increase in the volume occupied by the coating organic material can be suppressed, and also the metallic silver fine particles have good low-temperature sintering properties, and at the same time, the production of metallic silver fine particles is not practically high in cost. Further, when being 200 nm or less, the dispersibility of the metallic silver fine particles is not changed with the laps of time, and the fusion temperature does not increase, which is preferable.

The particle size of the metallic silver fine particles may not be constant. The average primary particle size of the metallic silver fine particles is preferably 200 nm or less as described above, but, for example, in the case that used for the conductive ink for conductive pattern printing or the like, metallic silver fine particles having an average primary particle size exceeding 200 nm may be included, if no inconvenience such as agglomeration rises when a dispersant or the like is included as an optional component. In addition, metallic silver microparticles may be added if necessary.

The particle size of the metallic silver fine particles can be measured with a dynamic light scattering method, a small-angle X-ray scattering method or a wide-angle X-ray diffraction method. In order to show depression of the melting point of the metallic silver fine particles with a nano size, a crystallite diameter obtained with the X-ray diffraction method is suitable. For example, in the wide-angle X-ray diffraction method, to be more specific, the particle size can be measured within the range where $2\theta$ is 30 ° to 80 ° with the diffraction method using RINT-Ultima III available from Rigaku Corporation. In this case, samples should be measured by thinning so as to be a flat surface on a glass plate with approximately 0.1 to 1 mm in depth of a concave portion in the center portion. Further, the crystallite diameter (D) calculated by substituting a half bandwidth of obtained diffraction spectrum using JADE available from Rigaku Corporation into the Scherrer equation should be regarded as the average particle size.

$$D = K\lambda / B \cos\theta$$

Herein, K: Scherrer constant (0.9), $\lambda$: wavelength of X-ray, B: half bandwidth of diffraction line, $\theta$: Bragg angle.

The second metallic silver fine particles obtained according to the present invention are used by mixing with various compounds depending on their uses.

Hereinafter, the method for producing metallic silver fine particles of the present invention will be explained in more detail by referring examples and comparative examples, but the present invention is not limited to these examples at all.

<<Example 1>>

3 g of silver oxalate was added to 4.6 g of 3-ethoxypropylamine (alkoxyamine having 5 carbon atoms) while stirring, and was stirred sufficiently with a magnetic stirrer to thicken. The obtained viscous substance was put in a constant-temperature bath at 120°C, and it was reacted for approximately 15 minutes to obtain a suspension containing the first metallic silver fine particles (first step).

Thereafter, 14.4 g of octanoic acid (carboxylic acid having 8 carbon atoms) which is a special class grade chemical available from Wako Pure Chemical Industries, Ltd. was added to the above suspension, and the resultant was again put in the constant-temperature bath at 100 °C and stirred for 15 minutes to substitute the organic material (3-ethoxypropylamine) coating the first metallic silver fine particles. After adding 10 ml of methanol and stirring, the metallic silver fine particles were precipitated by centrifugation and separated, and the supernatant was discarded. This operation was repeated once again to obtain the metallic silver fine particles 1 as the second metallic silver fine particles.

[Analytical Evaluation]

The metallic silver fine particles obtained in the above Example 1 were subjected to the following analyses and evaluations. The results are shown in Table 1.

(1) Average Primary Particle Size and Standard Deviation

Average primary particle size was calculated by using particle images taken with SEM (S-4800 model available from Hitachi, Ltd.). From the 5 or more SEM images of different shooting points, the primary particle sizes in total of 200 particles or more were measured by using an image processing software (MITANI CORPORATION, Win ROOF), and the average primary particle size was calculated by arithmetic mean.

(2) Particle morphology

From the SEM image observed in the above (1), the particles were visually classified into three types of spherical, plate and polygonal shapes. In FIG. 1, the SEM images of Examples 1, 4, 9, 10 and 11 and Comparative Examples 4, 6 and 8 are shown.

(3) Crystallite Size

From the X-ray diffraction pattern of the metallic silver fine particles obtained by X-ray diffractometer (RINT Ultima III available from Rigaku Corporation), the crystallite size of the (111) plane is calculated according to the Scherrer equation.

(4) Weight loss starting temperature

The thermogravimetric analysis was carried out by using TG-DTA (TG / DTA 6300 available from SII). Analysis was carried out by elevating the temperature of the particles in an N2 (200 ml/min) atmosphere up to 550 °C at 10 °C/min, confirming that the surface-coating organic substance was substituted, and determining the temperature at which the weight loss started.

(5) Total Evaluation

A case where spherical particles which is suitable for the conductive particles and the bonding material and where and any coarse particles were not produced was evaluated as "○".

<<Example 2>>

The metallic silver fine particles were obtained in the same manner as in Example 1 except that 10.4 g of ethoxyacetic acid, which is a carboxylic acid having 4 carbon atoms, was added instead of octanoic acid. The evaluation results are shown in Table 1.

<<Example 3>>

The metallic silver fine particles were obtained in the same manner as in Example 1 except that 11.8 g of 3-ethoxypropionic acid, which is a carboxylic acid having 5 carbon atoms, was added instead of octanoic acid. The evaluation results are shown in Table 1.

<<Example 4>>

The metallic silver fine particles were obtained in the same manner as in Example 1 except that 9.0 g of methoxyacetic acid, which is a carboxylic acid having 3 carbon atoms, was added instead of octanoic acid. The evaluation results are shown in Table 1.

<<Example 5>>

The metallic silver fine particles were obtained in the same manner as in Example 1 except that 11.6 g of levulinic acid, which is a carboxylic acid having 5 carbon atoms, was added instead of octanoic acid. The evaluation results are shown in Table 1.

<<Example 6>>

The metallic silver fine particles were obtained in the same manner as in Example 11 except that 16.0 g of 3-methyladipic acid, which is a carboxylic acid having 6 carbon atoms, was added instead of octanoic acid. The evaluation results are shown in Table 1.

<<Example 7>>

The metallic silver fine particles were obtained in the same manner as in Example 1 except that 16.0 g of monomethyl adipate, which is a carboxylic acid having 7 carbon atoms, was added instead of octanoic acid. The evaluation results are shown in Table 1.

<<Example 8>>

The metallic silver fine particles were obtained in the same manner as in Example 1 except that 13.2 g of glutaric acid, which is a carboxylic acid having 5 carbon atoms, was added instead of octanoic acid. The evaluation results are shown in Table 1.

<<Example 9>>

The metallic silver fine particles were obtained in the same manner as in Example 1 except that 10.5 g of 2-(2-aminoethoxy)ethanol, which is an amine having 4 carbon atoms, was added instead of octanoic acid. The evaluation results are shown in Table 1.

<<Example 10>>

The metallic silver fine particles were obtained in the same manner as in Example 1 except that 4.6 g of 3-ethoxypropylamine was changed to 4.2 g of 2-(2-aminoethoxy) ethanol to obtain a suspension containing the metallic silver fine particles 2, and 11.6 g of levulinic acid was added instead of octanoic acid. The evaluation results are shown in Table 1.

«Example 11»

The metallic silver fine particles were obtained in the same manner as in Example 2 except that 4.6 g of 3-ethoxypropylamine which is an amine having 5 carbon atoms was changed to 4.1 g of N-methyl-1,3-diaminopropane which is an amine having 4 carbon atoms to obtain a suspension containing the metallic silver fine particles 3, and 11.6 g of levulinic acid was added instead of octanoic acid. The evaluation results are shown in Table 1.

<<Comparative Example 1>>

The metallic silver fine particles were obtained in the same manner as in Example 1 except that 5.2 g of octanoic acid was added instead of 4.6 g of 3-ethoxypropylamine and the substitution operation was not carried out. The evaluation results are shown in Table 2.

<<Comparative Example 2>>

The metallic silver fine particles were obtained in the same manner as in Example 1 except that 5.2 g of octanoic acid was added instead of 4.6 g of 3-ethoxypropylamine, the obtained viscous substance was put in the constant temperature bath at 160 °C, and the substitution operation was not carried out. The evaluation results are shown in Table 2.

<<Comparative Example 3>>

The metallic silver fine particles were obtained in the same manner as in Example 1 except that 1.5 g of 3-amino-1-propanol and 5.2 g of octanoic acid were added instead of 4.6 g of 3-ethoxypropylamine and the substitution operation was not carried out. The evaluation results are shown in Table 2.

<<Comparative Example 4>>

The metallic silver fine particles were obtained in the same manner as in Example 1 except that 1.5 g of 3-amino-1-propanol and 5.2 g of octanoic acid were added instead of 4.6 g of 3-ethoxypropylamine, the obtained viscous substance was put in the constant temperature bath at 150 °C, and the substitution operation was not carried out. The evaluation results are shown in Table 2.

<<Comparative Example 5>>

The metallic silver fine particles were obtained in the same manner as in Example 1 except that 1.5 g of 2-methoxyethylamine and 5.2 g of octanoic acid were added instead of 4.6 g of 3-ethoxypropylamine and the substitution operation was not carried out. The evaluation results are shown in Table 2.

<<Comparative Example 6>>

The metallic silver fine particles were obtained in the same manner as in Example 1 except that 1.5 g of 2-methoxyethylamine and 5.2 g of octanoic acid were added instead of 4.6 g of 3-ethoxypropylamine, the obtained viscous substance was put in the constant temperature bath at 170 °C, and the substitution operation was not carried out. The evaluation results are shown in Table 2.

<<Comparative Example 7>>

The metallic silver fine particles were obtained in the same manner as in Example 1 except that 2.1 g of 3-ethoxypropylamine was used instead of 4.6 g of 3-ethoxypropylamine, 5.2 g of octanoic acid was added to the thickening substance which was obtained by mixing with silver oxalate, and the substitution operation was not carried out. The evaluation results are shown in Table 2.

<<Comparative Example 8>>

The metallic silver fine particles were obtained in the same manner as in Example 1 except that 2.1 g of 3-ethoxypropylamine was used instead of 4.6 g of 3-ethoxypropylamine, 5.2 g of octanoic acid was added to the thickening substance which was obtained by mixing with silver oxalate, the temperature of the constant temperature bath in the synthesis procedure was 160 °C, and the substitution operation was not carried out. The evaluation results are shown in Table 2.

<<Comparative Example 9>>

The metallic silver fine particles were obtained in the same manner as in Example 1 except that the temperature of the constant temperature bath in the synthesis procedure was 160 °C, and 10.8 g of 12-aminododecanoic acid was added instead of octanoic acid. The evaluation results are shown in Table 2.

[Table 1]

| | Conditions of substitution | | Analytical results | | | | | |
|---|---|---|---|---|---|---|---|---|
| | Amine mixed with silver oxalate | Amine or Carboxylic acid for substitution | Ave. primary particle size [nm] | Standard deviation [nm] | Particle morphology | Crystallite size [nm] | Weight loss starting temp. [°C] | Total evaluation |
| Ex. 1 | 3-ethoxypropylamine | octanoic acid | 42 | 11 | spherical | 19 | 240 | ○ |
| Ex. 2 | 3-ethoxypropylamine | ethoxyacetic acid | 38 | 9 | spherical | 19 | 130 | ○ |
| Ex. 3 | 3-ethoxypropylamine | 3-ethoxypropionic acid | 48 | 10 | spherical | 19 | 200 | ○ |
| Ex. 4 | 3-ethoxypropylamine | methoxyacetic acid | 44 | 11 | spherical | 23 | 150 | ○ |
| Ex. 5 | 3-ethoxypropylamine | levulinic acid | 45 | 12 | spherical | 20 | 140 | ○ |
| Ex. 6 | 3-ethoxypropylamine | 3-methyladipic acid | 45 | 10 | spherical | 20 | 220 | ○ |
| Ex. 7 | 3-ethoxypropylamine | monomethyl adipate | 48 | 11 | spherical | 19 | 200 | ○ |
| Ex. 8 | 3-ethoxypropylamine | glutaric acid | 51 | 10 | spherical | 20 | 220 | ○ |
| Ex. 9 | 3-ethoxypropylamine | 2-(2-aminoethoxy)ethanol | 49 | 11 | spherical | 20 | 60 | ○ |
| Ex. 10 | 2-(2-aminoethoxy) ethanol | levulinic acid | 148 | 55 | spherical | 30 | 140 | ○ |
| Ex. 11 | N-methyl-1,3-diaminopropane | levulinic acid | 26 | 6 | spherical | 17 | 100 | ○ |

[Table 2]

| | Conditions and results of synthesis | | | | Analytical results | | | | |
|---|---|---|---|---|---|---|---|---|---|
| | Amine or carboxylic acid mixed with silver oxalate | Temperature of constant temperature bath [°C] | Production of particles | Amine or Carboxylic acid for substitution | Ave. primary particle size [nm] | Standard deviation [nm] | Particle morphology | Crystallite size [nm] | Total evaluation |
| Com. Ex. 1 | octanoic acid | 120 | × | - | - | - | - | - | × |
| Com. Ex. 2 | octanoic acid | 160 | × | - | - | - | - | - | × |
| Com. Ex. 3 | 3-amino-1-propanol octanoic acid | 120 | × | - | - | - | - | - | × |
| Com. Ex. 4 | 3-amino-1-propanol octanoic acid | 150 | ○ | no | cannot | cannot | spherical plate | 17 | × |
| Com. Ex. 5 | 2-(2-aminoethoxy) ethanol octanoic acid | 120 | × | - | - | - | - | - | × |
| Com. Ex. 6 | 2-(2-aminoethoxy) ethanol octanoic acid | 170 | ○ | no | cannot | cannot | spherical plate | 17 | × |
| Com. Ex. 7 | 3-ethoxypropylamine octanoic acid | 120 | × | - | - | - | - | - | × |
| Com. Ex. 8 | 3-ethoxypropylamine octanoic acid | 160 | ○ | no | cannot | cannot | spherical plate | 10 | × |
| Com. Ex. 9 | 3-ethoxypropylamine | 100 | ○ | 12-aminododecanoic acid | cannot recover silver fine particles | - | - | - | × |

From the results shown in Table 1 and Table 2, it can be seen that the particle size and particle morphology of the metallic silver fine particles to be produced can be controlled by the combination of the amine or the carboxylic acid which substitutes to the amine used for complex formation. Further, by adding the amine or the carboxylic acid to be substituted to the metallic silver fine particles having the objective particle size and particle morphology produced in the first step and heating and stirring, the surface-coated organic material can be substituted. At this time, two or more kinds of amine or carboxylic acid can be added, and it is possible to freely control the coating ratio of each surface-coating organic material by varying the charging ratio. Therefore, it is possible to coat metallic silver fine particles having the desired particle size, particle morphology and particle size distribution with the surface-coating organic materials according to the purpose. In Comparative Example 9, although the silver fine particles are formed, since the silver fine particles after the substitution agglomerate and precipitate, the silver fine particles cannot be recovered.

In the case of coating with a carboxylic acid, conventionally, the complex formation of silver oxalate and carboxylic acid would not proceed and it was difficult to obtain metallic silver fine particles mainly composed of carboxylic acid coating. However, according to the present invention, it is possible to easily obtain the metallic silver fine particles coated with a target carboxylic acid under mild conditions on metallic silver fine particles having the desired particle size and particle morphology. Since the adsorption energy of organic substances on the surface of metallic silver fine particles is larger than a carboxylic acid in comparison with an amine, it is considered relatively easy to substitute the amine for the carboxylic acid, but in the present invention, it is possible to substitute the amine for each of the amine or the carboxylic acids.

**Claims**

1. A method for producing metallic silver fine particles, which comprises:

   a first step of heating and decomposing a complex compound including silver oxalate and a coordination compound which is a first amine to obtain first metallic silver fine particles; and
   a second step of mixing a second amine which is different from the first amine, or a carboxylic acid with the first metallic silver fine particles to obtain second metallic silver fine particles in which at least a portion of the first amine of the first metallic silver fine particles is substituted with the second amine or the carboxylic acid, and
   wherein the first amine has 5 carbon atoms or fewer.

2. The method for producing metallic silver fine particles according to claim 1, wherein the first amine is an alkoxyamine.

3. The method for producing metallic silver fine particles according to any one of claims 1 or 2, wherein the second amine or the carboxylic acid has 11 carbon atoms or fewer.

4. The method for producing metallic silver fine particles according to any one of claims 1 to 3, wherein, in the second step, the second amine or the carboxylic acid is mixed with the first metallic silver fine particles and heated and stirred.

5. The method for producing metallic silver fine particles according to any one of claims 1 to 4, wherein an average primary particle size of the first metallic silver fine particles and the second metallic silver fine particles is 10 to 200 nm; the average primary particle size being defined as the arithmetic mean of particle size measurements of 200 or more particles from five or more scanning electron microscope images.

6. The method for producing metallic silver fine particles according to any one of claims 1 to 5, wherein, in the second step, the substitution is carried out under the conditions of a heating temperature of 50 to 150 °C and/or a heating period of time of 5 to 20 minutes.

**Patentansprüche**

1. Verfahren zur Herstellung von Feinteilchen aus metallischem Silber, das Folgendes umfasst:

   einen ersten Schritt des Erhitzens und Zersetzens einer Komplexverbindung, die Silberoxalat und eine Koordinationsverbindung umfasst, die ein erstes Amin ist, um erste Feinteilchen aus metallischem Silber zu erhalten; und
   einen zweiten Schritt des Vermischens eines zweiten Amins, das sich von dem ersten Amin unterscheidet, oder einer Carbonsäure mit den ersten Feinteilchen aus metallischem Silber, um zweite Feinteilchen aus metallischem Silber zu erhalten, in denen zumindest ein Teil des ersten Amins der ersten Feinteilchen aus metallischem Silber mit dem zweiten Amin oder der Carbonsäure substituiert ist; und

wobei das erste Amin 5 Kohlenstoffatome oder weniger aufweist.

2.  Verfahren zur Herstellung von Feinteilchen aus metallischem Silber nach Anspruch 1, wobei das erste Amin ein Alkoxyamin ist.

3.  Verfahren zur Herstellung von Feinteilchen aus metallischem Silber nach einem der Ansprüche 1 oder 2, wobei das zweite Amin oder die Carbonsäure 11 Kohlenstoffatome oder weniger aufweist.

4.  Verfahren zur Herstellung von Feinteilchen aus metallischem Silber nach einem der Ansprüche 1 bis 3, wobei in dem zweiten Schritt das zweite Amin oder die Carbonsäure mit den ersten Feinteilchen aus metallischem Silber vermischt und erhitzt und gerührt wird.

5.  Verfahren zur Herstellung von Feinteilchen aus metallischem Silber nach einem der Ansprüche 1 bis 4, wobei die durchschnittliche Primärteilchengröße der ersten Feinteilchen aus metallischem Silber und der zweiten Feinteilchen aus metallischem Silber 10 bis 200 nm beträgt;

    wobei die durchschnittliche Primärteilchengröße als arithmetischer Mittelwert von Teilchengrößenmessungen von 200 oder mehr Teilchen aus fünf oder mehr Rasterelektronenmikroskopbildern definiert ist.

6.  Verfahren zur Herstellung von Feinteilchen aus metallischem Silber nach einem der Ansprüche 1 bis 5, wobei im zweiten Schritt die Substitution unter den Bedingungen einer Temperatur des Erhitzens von 50 °C bis 150 °C und/oder einer Dauer des Erhitzens von 5 bis 20 min durchgeführt wird.

**Revendications**

1.  Procédé de production de particules fines d'argent métallique, qui comprend :

    une première étape consistant à chauffer et décomposer un composé complexe comprenant de l'oxalate d'argent et un composé de coordination qui est une première amine pour obtenir des premières particules fines d'argent métallique ; et

    une seconde étape consistant à mélanger une seconde amine qui est différente de la première amine, ou un acide carboxylique avec les premières particules fines d'argent métallique pour obtenir des secondes particules fines d'argent métallique dans lesquelles au moins une partie de la première amine des premières particules fines d'argent métallique est substituée par la seconde amine ou l'acide carboxylique, et

    dans lequel la première amine a 5 atomes de carbone ou moins.

2.  Procédé de production de particules fines d'argent métallique selon la revendication 1, dans lequel la première amine est une alcoxyamine.

3.  Procédé de production de particules fines d'argent métallique selon l'une quelconque des revendications 1 ou 2, dans lequel la seconde amine ou l'acide carboxylique a 11 atomes de carbone ou moins.

4.  Procédé de production de particules fines d'argent métallique selon l'une quelconque des revendications 1 à 3, dans lequel, dans la seconde étape, la seconde amine ou l'acide carboxylique est mélangé(e) avec les premières particules fines d'argent métallique et chauffé(e) et agité(e) .

5.  Procédé de production de particules fines d'argent métallique selon l'une quelconque des revendications 1 à 4, dans lequel une taille de particule primaire moyenne des premières particules fines d'argent métallique et des secondes particules fines d'argent métallique est de 10 à 200 nm ;

    la taille de particule primaire moyenne étant définie comme la moyenne arithmétique de mesures de taille de particule de 200 particules ou plus à partir de cinq images de microscope électronique à balayage ou plus.

6.  Procédé de production de particules fines d'argent métallique selon l'une quelconque des revendications 1 à 5, dans lequel, dans la seconde étape, la substitution est effectuée dans les conditions d'une température de chauffage de 50 à 150°C et/ou d'une période de temps de chauffage de 5 à 20 minutes.

[FIG. 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009270146 A
- JP 2012162767 A
- EP 2881199 A
- US 2010028013 A
- US 20100279006 A